# EUROPEAN PATENT APPLICATION

(11) **EP 1 557 777 A1**
(43) Date of publication of application: **27.07.2005**
(21) Application number: 05001588.2
(22) Date of filing: 26.01.2005
(51) Int. Cl.: G06F 17/60, H04L 12/58

(54) **Method, device and computer readable medium for classifying electronic mails**

(30) Priority: 26.01.2004 JP 2004017387
(71) Applicant: NEC CORPORATION, Tokyo (JP)
(72) Inventor: Yabe, Masato, Minato-ku, Tokyo (JP)
(74) Representative: VOSSIUS & PARTNER

(57) **Abstract**

Classification of e-mails stored in a storage device of an e-mail terminal into groups by the e-mail terminal. The method includes: storing to a storage device of the e-mail terminal relations between keywords and groups, wherein each of the relations is capable of relating a single keyword with plural groups; designating one of the groups in the relations; and categorizing an e-mail that includes the keywords related to the designated group as one belonging to the designated group.

## Description

This invention relates to an electronic mail (hereinafter may be referred to as e-mails or mails), a terminal for receiving/sending e-mails. This invention particularly relates to method, device and computer program for classifying or grouping e-mails.

In order to manage data of received mails, some e-mail terminals automatically classify received mails into groups and, in accordance with user input to designate one of the groups, display a list of part of the received mails belonging to the designated group.

JP-A- 2001-75891, hereinafter referred to as cited reference 1, discloses an e-mail receiver device that automatically classifies a received mail into one of groups in accordance with predetermined relation between the groups and sender's addresses.

JP-A-2002-244984, hereinafter referred to as cited reference 2, discloses an e-mail management device that previously registers relation between addresses and storage areas and stores a received mail into one of the storage areas in accordance with the relation.

JP-A- 2003-242083, hereinafter referred to as cited reference 3, discloses an e-mail management device that classifies a mail in accordance with group information in its sender's address and sorts a list of received mails in accordance with the classification. In the cited reference, a mail address is composed of an account, an at mark (@) and a combination of subdomains and domains, and the group information is for example the combination of subdomains and domains, or a letter string following the at mark.

JP-A- 2003-198633, hereinafter referred to as cited reference 4, discloses an e-mail server computer for handling incoming mails. The server classifies a mail into one of groups, stores the mail into a storage area for the group, and sends the mail in response to requests from clients which belong to the group. Each of the groups is for example related with a subdomain/domain of its recipient's address, a keyword in its subject, or a keyword in its message body.

According to the cited references 1, 2 and 3, a single sender's address is related with a single group in the relation. Since this is one-to-one relation, these techniques are unavailable for one-to-many relation.

For example, it is assumed that a user U1 of an address aaa@bbb.ccc is a friend and a business partner of another user U2. According to the cited references 1-3, the user has to select one of a group "business partners" or a group ''friends'' and relate the selected one to the address aaa@bbb.ccc When the selected group is designated to display a list of part of all mails in a storage device, the mails from the address aaa@bbb.ccc are included in the list. On the other hand, when the other group is designated, the mails from the address aaa@bbb.ccc are not included.

According to the cited reference 4, a mail is classified into a group with reference to its subject or message body. If its subject or message body includes predetermined keywords related to a designated group, then the mail is classified into the designated group. Since mail addresses are not referred to classify mails, mails received from a single address can be classified into different groups. However, this classification requires predetermined keywords to classify mails.

One of objects of the present invention is to provide technique for classifying e-mails into groups where a member belonging to one of the groups may belong to another one of the groups.

This invention provides a method of classifying electronic mails or e-mails stored in a storage device of an e-mail terminal into groups by the e-mail terminal. The method includes; storing to a storage device of the e-mail terminal relations between keywords and groups, wherein each of the relations is capable of relating a single keyword with plural groups; designating one of the groups in the relations; and categorizing an e-mail that includes the keywords related to the designated group as one belonging to the designated group.

The e-mail terminal is for example a desktop/laptop computer, a PDA (Personal Digital Assistant), a wireless communication terminal such as cellular phone terminal. The designation of a group may be made as user operation with input device such as keypad, keyboard and mouse, or as output from another process executed on the e-mail terminal.

If an e-mail includes a header field, then at least one of the keywords may be compared to the body of the header field at the step of categorizing. Particularly, if the header field is an originator field of the e-mail, then it is preferable that the keywords include an e-mail address and the e-mail address is compared to the body of the originator field at the step of categorizing.

If an e-mail includes a message body, then at least one of the keywords may be compared to words in the message body at the step of categorizing.

This classification is applicable for displaying a list of part of e-mails stored in an e-mail terminal on its display device. In this case, the method includes: storing to a storage device of the e-mail terminal relations between keywords and groups, wherein each of the relations is capable of relating a single keyword with plural groups; designating one of the groups in the relations; categorizing ones of the e-mails that include the keywords related to the designated group as ones belonging to the designated group; and displaying a list of the categorized mails on a display device of the e-mail terminal.

This invention further provides a terminal device for receiving electronic mails or e-mails. This terminal includes storage for storing relations between keywords and groups, wherein each of the relations is capable of relating a single keyword with plural groups; a unit for designating one of the groups in the relations; and a processor for categorizing an e-mail that includes the keywords related to the designated group as one belonging to the designated group. The unit for designating a group may be an input device such as keypad, keyboard and mouse, or may be the processor that executes another process.

If an e-mail includes a header field, then the processor may compare at least one of the keywords to the body of the header field. Particularly, if the header field is an originator field of the e-mail, then it is preferable that the keywords include an e-mail address and the processor compares the e-mail address to the body of the originator field.

If an e-mail includes a message body, then the processor may compare at least one of the keywords to words in the message body.

It is preferable that the processor categorizes ones of the e-mails that include the keywords related to the designated group as ones belonging to the designated group and the terminal device further includes a display device for displaying a list of the categorized mails.

This invention further provides a computer readable medium storing computer executable instructions operable to execute a method for classifying electronic mails or e-mails stored in a storage device of an e-mail terminal into groups by the e-mail terminal. The method includes: storing to a storage device of the e-mail terminal relations between keywords and groups, wherein each of the relations is capable of relating a single keyword with plural groups; designating one of the groups in the relations; and categorizing an e-mail that includes the keywords related to the designated group as one belonging to the designated group.

According to one aspect of the present invention, an e-mail client registers classification information in which a single e-mail address may be related to plural groups. In response to designating one of the groups, the client retrieves mails received from addresses related to the designated group from a storage device for storing received mails

According to another aspect of the present invention, plural group attributes may be given to a single e-mail address. Even if an address belongs to plural groups, then mails from the address are included in each one of the plural groups. Therefore, the classification of the present invention is applicable to practical human relationship.

According to another aspect of the present invention, since the classification is independent from data structure of mails in a storage device, it is easy to add a new group to current groups, to remove one of current groups and to update current groups. It is not required to move sets of mail data from a storage area to another in order to classify an address from a current group to another group.
Fig. 1 shows a block diagram for describing a portable communication terminal as an embodiment of the present invention;
Fig. 2 shows a table of group attribute information 201;
Fig. 3 shows a table of address book information 301;
Fig. 4 shows a table of mail data 401;
Fig. 5 shows a relation between the address book information 301 and the mail data 401;
Fig. 6 shows a flowchart for describing processes of displaying a list of mails with designating a group;
Fig. 7 shows a flowchart for describing STEP 703 in Fig. 6;

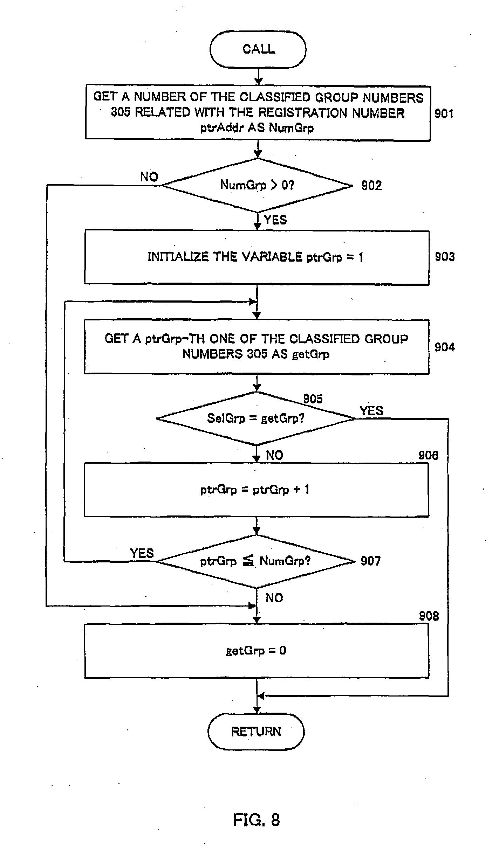

Fig. 8 shows a flowchart for describing STEP 705 in Fig. 6;
Fig. 9A shows an example of displayed list of mails of the mail data 401 with designating a group;
Fig. 9B shows an example of displayed list of mails of the mail data 401 with designating a group;
Fig. 9C shows an example of displayed list of mails of the mail data 401 with designating a group; and
Fig. 9D shows an example of displayed list of mails of the mail data 401 with designating a group.

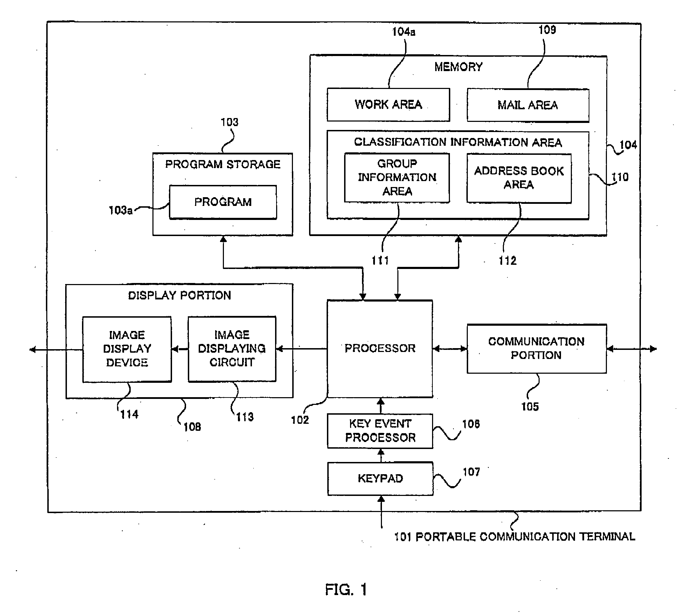

Description will be made about an embodiment of the present invention. As shown in Fig. 1, this embodiment is a portable communication terminal 101, which includes functions for receiving/sending e-mail, such as a cellular phone terminal and a PDA (Personal Data Assistance) with a wireless communication unit

The portable communication terminal 101 includes a processor 102, a program storage 103, a memory 104, a communication portion 105, a key event processor 106, a keypad 107 and a display portion 108.

The processor 102 retrieves corresponding mails from the memory 104.

The memory 104 is a RAM (Random Access Memory) and includes a work area 104a, a mail area 109, a classification information area 110. The processor 102 loads programs and data to the work area 104a. The mail area 109 stores mails received through the communication portion 105. The classification information area 110 stores information for classifying mails stored in the mail area 109. The classification information area 110 includes a group information area 111 and an address book area 112. The contents of the classification information area 110 and the address book area 112 will be hereinafter described.

The display portion 108 includes an image displaying circuit 111 and an image display device 112.

The program storage 103 is a memory device including a computer readable recording medium for storing programs that the portable communication terminal 101 performs according to.

In accordance with instructions from the processor 012, the communication portion 105 receives/sends electronic mails or e-mails from/to other e-mail clients.

The keypad 107 is an input device for receiving input operations by the user of the portable communication terminal 101. The keypad 107 converts physical operations of fingers to signals.

The key event processor 106 receives signals from the keypad 107 and translates them to specific character codes. As a result, the processor 102 receives information corresponding to the input operations.

The display portion 108 displays images on its screen under control of the processor 102 in accordance with the input operations through the keypad 107. The image displaying circuit 111 generates image signals corresponding to instructions from the processor 102. The image display device 114 displays images corresponding to the image signals.

The group information area 111 stores sets of group attribute information each of which means that if a set of group attribute information has been related to an e-mail address, then e-mails received from the e-mail address is to be classified into a group corresponding to the set of group attribute information.

A set of group attribute information is composed of a group number and a group name. A group number designates a group defined in the sets of group-attribute information stored in the group information area 111. A group name shows its corresponding group to the user. The sets of group attribute information are editable by input operations through the keypad 107.

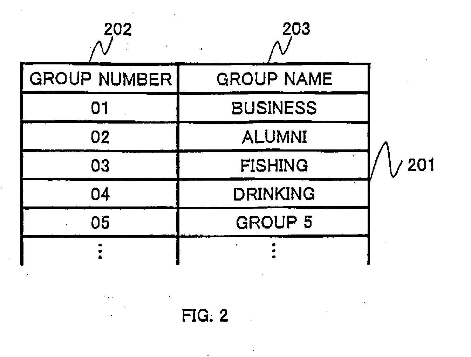

For example, as shown in Fig. 2, group numbers 202 and group names 203 are related to each other in group attribute information sets 201. A group name 203 is initially set as a combination of "GROUP" and its corresponding group number 202. The group name "GROUP 5" corresponding to the group number "05" has not been edited. On the other hand, the group names corresponding to the group numbers "01", "02", "03" and "04" have already been edited to change to "BUSINESS", "ALUMNI", "FISHING" and "DRINKING", respectively.

Turning to Fig. 1, the address book area 112 stores address book information including registration numbers, registrant names and e-mail addresses. Two or more e-mail addresses may be related to a single registration number and registrant name. Additionally, one or plural group numbers, which have been described with reference to Fig. 2, may be related to a single e-mail address and be stored in the address book area 112.

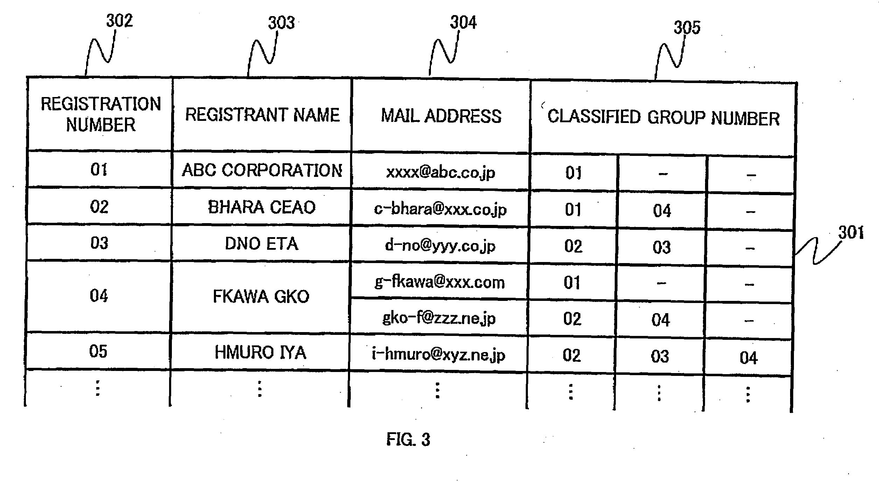

For example, as shown in Fig. 3, address book information 301 includes registration numbers 302, registrant names 303, e-mail addresses 304 and classified group numbers 305. One or two e-mail addresses are related to each one of the registration numbers 302 and registrant names 303. One, two or three group numbers are related to each one of the e-mail addresses 304.

The group information area 111 previously stores group numbers and then one of them is stored in the address book area 112. With reference to Figs. 2 and 3, group numbers "01", "02", "03", "04" and "05" and corresponding group names are previously defined in the group attribute information 201. Then, One, two or three of the group numbers "01", "02", "03", "04" and "05" are related to each one of the e-mail addresses 304 as the classified group numbers 305.

A registrant name 303 is a name of a user of a corresponding e-mail address. The user may be an individual or a company. One or plural e-mail addresses may be related to each of the registrant names 303. The processor 102 generates a new registration number 302 in response to registration of a new registrant name 304.

Turning to Fig. 1, the mail area 109 stores mails received through the communication portion 105 in accordance with the processor 102.

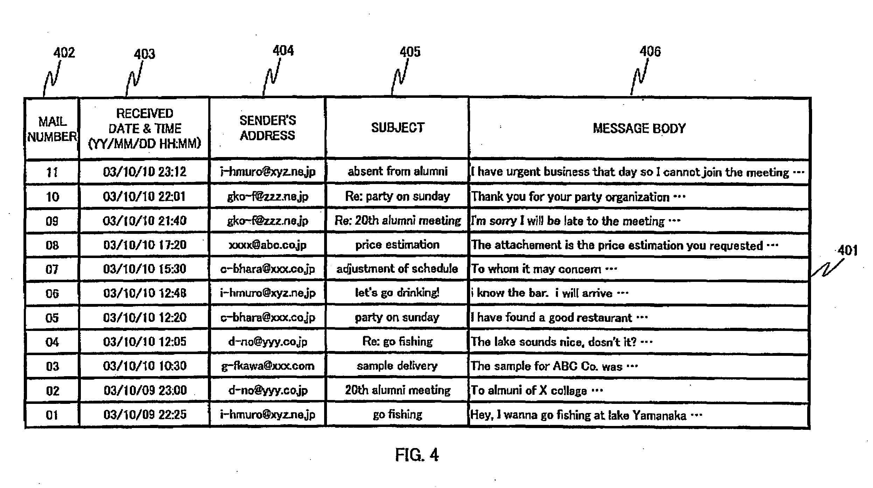

For example, the mail area 109 stores mail data 401 as shown in Fig. 4. The mail data 401 now includes eleven records each of which corresponds to an e-mail received from another e-mail terminal through the communication portion 105. Each of the records includes a mail number 402, a received time 403, a sender's address 404, a subject 405, and a massage body 406. In accordance with the programs 103a or input operation through the keypad 107, the processor 102 may add a sender's address 404 to the address book information 301 if the sender's address 404 has not been registered to the address book information 301.

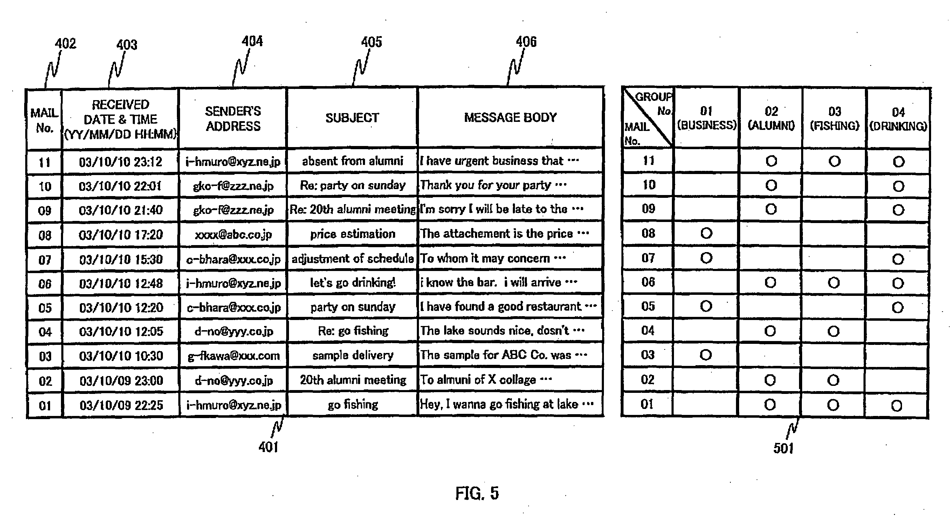

As described above, the mail addresses 303 are previously related to group numbers 305 in the address book information 301, and then, a mail of the mail data 401 can be classified into groups that the sender's address 404 of the mail is related to in the address book information 301. In the case of the group attribute information 201 shown in Fig. 2, the address book information 301 shown in Fig. 3 and the mail data 401 shown in Fig. 4, this classification is shown as Fig. 5. With reference to the mail of the top record of the mail data 401, its sender's address 404 "i-hmuro@xyz.ne.jp" is related to the group numbers "02", "03" and "04" in the address book information 301. Therefore, the top record can be classified into the group numbers "02", "03" and "04", namely the groups "ALUMNI", "FISHING" and "DRINKING" respectively as defined in the group attribute information 201.

Turning back to Fig. 1, the processor 102 reads the programs 103a stored in the program storage 103 and performs various processes in accordance with the programs 103a.

For example: the processor 102 updates the group attribute information 201 stored in the group information area 111 in accordance with input operation through the keypad 107; the processor 102 updates the address book information 301 stored in the address book area 112 in accordance with the input operation; and the processor 102 makes the communication portion 105 receive a mail and stores it into the mail area 109.

Further, the processor 102 performs processes for: accepting a group number through the keypad 107 for designating a group in the group attribute information 201; retrieving, from the mail data 401, mails whose senders addresses are related to the designated group; and sending signals to display the retrieved mails on the screen of the display portion 108.

Next, brief description will be made about operation of the portable communication terminal 101. The operation is performed under control of the processor 102 running the programs 103a.

In accordance with input operation through the keypad 107, group numbers 202 and group names 203 are stored in the group information area 111 as group attribute information 201.

With reference to the stored group attribute information 201, classified group numbers 305 are set to each mail address 304 in the address book information 301, which is stored in the address book area 112.

In response to receiving a mail by the communication portion 105, the processor 102 adds the new mail to the mail data 401 stored in the mail area 109.

When the user instructs the portable communication terminal 101 to display mails without designating specific groups, the display portion 108 displays a list including all mails in the mail data 401. Contents of the list are dependent on the size/resolution of the screen of the display portion 108. The contents may be part of all items in the mail data 401 and, for example, may only include the sender's addresses 404 and the subjects 405. In this case, displayed mail data items are independent from their sender's address 404 and related group numbers.

On the other hand, when the user instructs the terminal 101 to display mails with designating specific groups, the display portion 108 displays, for example as shown in Fig. 2, a list of groups that has been registered in the group attribute information 201 and displays request for selecting one or plural groups from the list with the keypad 107 to the user.

If the user designates a group number, the processor 102 retrieves mail addresses that are related to the designated group number in the address book information 301. Next, the processor 102 retrieves, from the mail data 401, mails whose sender's addresses 404 correspond to the retrieved mail addresses. Then, the processor 102 makes the display portion 108 display a list of the retrieved mail items. The displayed list only includes mails whose sender's addresses 404 is related to the designated group number in the address book information 301. As a result, if the user designates a group, then mails sent from addresses classified into the designated group are displayed on the screen of the display portion 108.

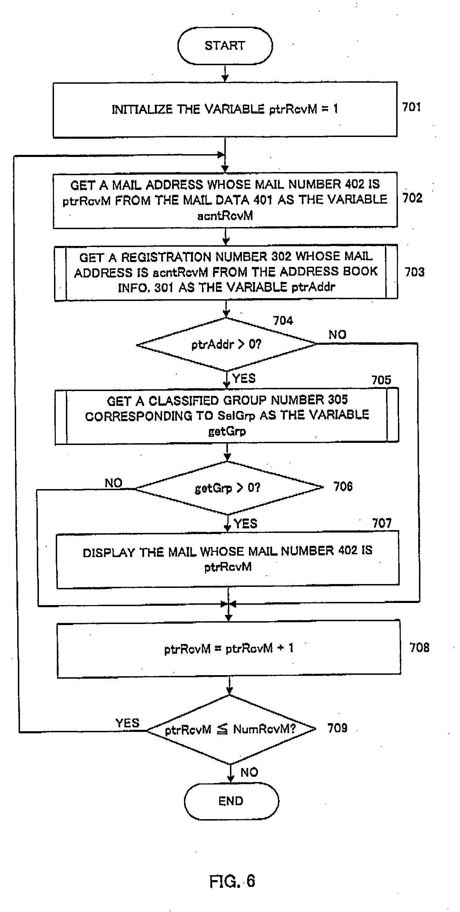

Detailed description will be made about the operation of the portable communication terminal 101 with reference to Fig. 6. It is assumed that: the group information area 111 is storing the group attribute information 201 shown in Fig. 2; the address book area 112 is storing the address book information 301 shown in Fig. 3; and the mail area 109 is storing the mail data 401 shown in Fig. 4.

In Fig. 6, "SelGrp" is a group number that the user of the terminal 101 inputs through the keypad 107 to select a group to display on the screen; "NumRcvM" is a number of mails stored in the mail data 401; "ptrAddr" is a pointer for one of the registration numbers 302, or zero if no corresponding one exists in the address book information 301; "ptrRcvM" is a pointer for one of the mail numbers 402 in the mail data 401; "acntRcvM" is a sender's address 404 corresponding to a current pointer "ptrRcvM"; and "getGrp" is one of the classified group numbers 305, or zero if no corresponding one exists in the address book information 301. In order to run the programs 103a, the processor 102 stores and updates these variables in the work area 104a.

SelGrp is previously set with the keypad 107. First, the processor 102 initializes prtRcvM to designate the mail number 402 "01", namely prtRcvM = 1 (STEP 701).

Next, the processor 102 accesses to the mail area 109 to read the mail data 401, searches for a mail of the mail number prtRcvM and acquires its sender's address 404 as acntRcvM (STEP 702).

The processor 102 then accesses to the address book area 112 to read the address book information 301 and searches for the mail address acntRcvM from the mail addresses 304 (STEP 703). If the mail address acntRcvM is found, then the processor 102 sets the variable ptrAddr at the registration number 302 corresponding to the mail address acntRcvM in the address book information 304. If the mail address acntRcvM is not registered in the address book information 304, then the processor 102 sets ptrAddr at zero.

Next, the processor 102 reads the value of ptrAddr to decide the following process (STEP 704). If ptraddr ≦ 0, then the processor 102 jumps to STEP 708 without displaying the mail of ptrRcvM on the screen of the display portion 108, since the value of ptrAddr means that the corresponding sender's address acntRcvM is not registered in the address book information 301, and consequently, the address acntRcvM does not belong to the group designated by SelGrp.

On the other hand, if the ptrAddr > 0 at STEP 704, namely the address acntRcvM has been registered in the address book information 301, then the processor 102 performs a process for deciding whether the address acntRcvM is related to the group number SelGrp (STEP 705). If the address is related to the group, then the variable getGrp is set to the group number designated by SelGrp. If the address is not related to the group, then the variable getGrp is set to zero.

The processor 102 selects the following step depending on the value of getGrp (STEP 706). If getGrp = 0, the processor 102 skips over STEP 707 to STEP 708, without displaying the mail of ptrRcvM on the screen of the display portion 108. If getGrp > 0, the processor 102 instructs the display portion 108 to display the mail designated by ptrRcvM on the screen (STEP 707).

From STEP 702 to 707, it is decided whether a mail designated by a current value of ptrRcvM is to be displayed or not. After that, the processor 102 increments ptrRcvM (STEP 708) and compares the incremented ptrRcvM with a number of mails in the mail data 401, which has previously been acquired as NumRcvM (STEP 709). If ptrRcvM ≦ NumRcvM, namely a mail designated by incremented prtRcvM exists in the mail data 401, then the operation continues to STEP 702. If ptrRcvM > NumRcvM, namely no corresponding mail exists in the mail data 401, then the operation is ended.

As a result, each one of mails in the mail data 401 is judged whether its sender's address is related to the group designated by SelGrp in the address book information 301, and only mails sent from addresses classified into a designated group are displayed on the display portion 108.

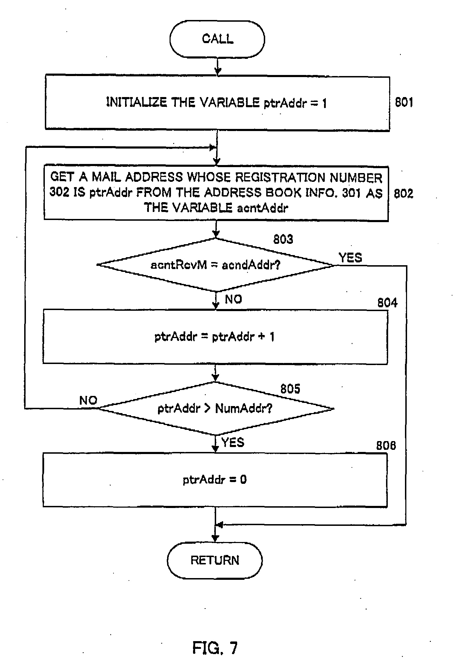

STEP 703 will be described with reference to Fig. 7. In addition to the above-mentioned variables, followings are used in Fig. 7. ptrAddr is a pointer for designating a registration number 302 in the address book information 301. acntAddr is a variable for storing an mail address 304 in the address book information 301. NumAddr is a number of mail addresses 304 stored in the address book information 301.

First, the processor 102 initializes to ptrAddr = 1, which designates one of the registration numbers 302 "01" in the address book information 301 (STEP 801).

Next, the processor 102 reads a mail address 304 related to the registration number ptrAddr =1, namely "xxxx@abc.co.jp" in the address book information 301 and sets "xxxx@abc.co.jp" to acntAddr (STEP 802). Then, the processor 102 compares the mail addresses stored in acntAddr and acntRcv, which has been stored at STEP 702 (STEP 802).

If acntAddr agrees with acntRcvM, then the processor 102 proceeds to STEP 704. If acntAddr disagrees with acntRcvM, then the processor 102 proceeds to STEP 804 (STEP 803).

In order to compare acntRcvM with next one of the mail addresses 304, the processor 102 adds +1 to ptrAddr (STEP 804) and compares ptrAddr with NumAdder (STEP 805).

If ptrAddr is smaller than or equal to NumAddr, then STEPS 802 to 805 are repeated, since there may be a mail address which agrees with acntRcvM. If ptrAddr is larger than NumAddr, namely none of the mail addresses 304 agrees with acntRcvM, then the processor 102 sets ptrAddr to NULL and proceeds to STEP 704.

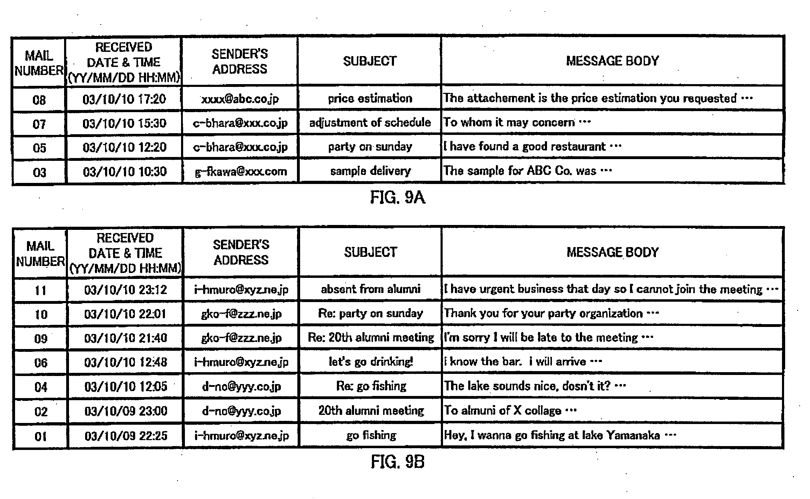

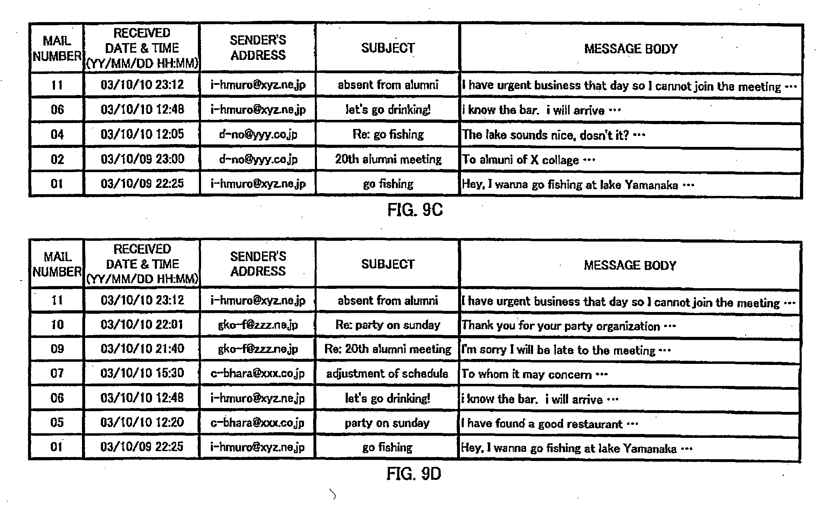

STEP 705 will be described with reference to Fig. 9, in which: NumGrp is a number of the classified group numbers 305 in address book information 301; ptrGrp is a pointer for designating one of the registration numbers 302 in the address book information 301; and getGrp is one of the classified group numbers 304 designated by ptrGrp.

Since it is confirmed that ptrAddr > 0 at STEP 704, there is a mail address corresponding to acntRcvM in the address book information 301. The processor 102 sets a number of the classified group numbers 305 related to the mail of which mail address is acntRcvM (STEP 901).

If no group number is related to the mail address, then the processor 102 proceeds to STEP 908. In this case, the processor 102 sets getGrp = 0 and proceeds to STEP 706 (STEP 908).

If one or more group numbers are related to the mail address, then the processor 102 proceeds to STEP 903. In this case, the processor 102 initializes ptrGrp = 1 (STEP 903) and sets a 1st one of the classified group numbers 305 to getGrp (STEP 904). Then the processor 102 compares getGrp with SelGrp, which is previously selected by the user (STEP 905).

If getGrp agrees with SelGrp, then the processor 102 keeps the current value of getGrp and proceeds to STEP 706. If getGrp disagrees with SelGrp, then the processor 102 increments ptrGrp (STEP 906) and compares ptrGrp with NumGrp (STEP 907).

If ptrGrp is smaller than or equal to NumGrp, then the processor 102 repeats STEPS 904 to 907 in order to compare a next classified group number getGrp with the selected group number SelGrp. If ptrGrp is larger than NumGrp, then the processor 102 sets getGrp = 0 and proceeds to STEP 706. Since that means that, although one or more group numbers are related to a mail address designated by ptrAddr, the selected group number SelGrp is not related to the mail address.

Example of classification by the portable communication terminal 101 will be descried with reference to Fig. 9. Now each of the group attribute information 201, the address book information 301 and the mail data 401 stores the values shown in Figs. 2, 3 and 4, respectively.
(A) It is assumed that the user selects the group "BUSINESS" in the group attribute information 201 by designating the group number 202 "01" or the group name 201 "BUSINESS" through the keypad 107. In this case, as shown in Fig. 5, the selected group number "01" or the selected group name "BUSINESS" is related to four mails of which mail numbers are "03", "05", "07" and "08". The sender's addresses of these four mails "xxxx@abc.co.jp", "c-bhara@xxx.co.jp" and "g-fkawa@xxx.com" are related to the group "BUSINESS" in the address book information 301. Therefore, in response to the selection of the group "BUSINESS", the processor 102 makes the display portion 108 to display a part of the mail data 401, as shown in Fig. 9A.
(B) It is similarly assumed that the user selects the group "ALUMNI" in the group attribute information 201 by designating the group number 202 "02" or the group name 201 "ALUMNI" through the keypad 107. In this case, the selected group number "02" or the selected group name "ALUMNI" is related to seven mails as shown in Fig. 5. The sender's addresses of these seven mails are related to the group "ALUMNI" in the address book information 301. Therefore, in response to the selection of the group "ALUMNI", another part of the mail data 401 is displayed on the display portion 108, as shown in Fig. 9B.
(C) It is assumed that the user selects the group "FISHING" in the group attribute information 201 by designating the group number 202 "03" or the group name 201 "FISHING" through the keypad 107. In this case, the selected group number "03" is related to five mails as shown in Fig. 5. Therefore, in response to the selection of the group "FISHING", another part of the mail data 401 is displayed on the display portion 108, as shown in Fig. 9C.
(D) It is assumed that the user selects the group "DRINKING" in the group attribute information 201 by designating the group number 202 "04" or the group name 201 "DRINKING" through the keypad 107. In this case, the selected group number "04" is related to seven mails as shown in Fig. 5. Therefore, in response to the selection of the group "DRINKING", another part of the mail data 401 is displayed on the display portion 108, as shown in Fig. 9D.

It is noted that although "g-fkawa@xxx.com" and "gko-f@zzz.ne.jp" are related to a single registrant name "FKAWA GKO", each of these addresses is independently related to classified group numbers. "g-fkawa@xxx.com" is related to the group number "01". "gko-f@zzz.ne.jp" is related to the group numbers "02" and "04".

According to one aspect of the present invention, one or plural group attributes may be related to a single mail address/user name, and consequently, mails related to a group can be selectively displayed in response to input operation to designate the group.

According to another aspect of the present invention, In order to add a new group and display mails of the group, it is required just to add a new group attribute to the group attribute information 201. Displayed contents are independent of the structure of the mail data 401,

On the other hand, according to a conventional technique to classify mails into groups and store each group into a different folder, displayed contents are dependent on the structure of mail data. Therefore, in order to add a new group and mails of the group, it is required to move to other folders mails that belong to the new group.

According to another aspect of the present invention, the classification of a mail is dependent on its sender's address. Therefore, when a single sender uses plural mail addresses, the user of the portable communication terminal 101 can display a mail from the sender dependent on its mail address.

While this invention has thus far been described in conjunction with a few embodiments thereof, it will be readily possible for those skilled in the art to put the this invention into various other manners.

For example, in the above-mentioned embodiment, each mail address in the address book information 301 can be related to three group numbers 305 at a maximum. However, the present invention is not restricted to the embodiment. It is easily understood by those skilled in the art that four or more group numbers can be related to a single sender's address.

Further, in the above-mentioned embodiment, as the group numbers 202 in the group attribute information 201, numbers are used as identifiers for designating groups. However, any type of character or a string of characters is available for the identifiers.

Further, in the above-mentioned embodiment, the user selects a single group to designate mails to be displayed. However, plural groups may be designated. In this case, either sum of sets or set intersection of designated mails may be displayed.

Further, in the above-mentioned embodiment, groups are related to sender's addresses. However, other items of the mail data 401 are available for those to be related to groups. For example, keywords in the mail bodies 406 may be previously related to a group. In this case, mails whose mail body includes one of the keywords related to a designated group is displayed. The relation between groups and keywords may be stored in the classification information area 110.

## Claims

1. A method of classifying electronic mails or e-mails stored in a storage device of an e-mail terminal into groups by the e-mail terminal, the method comprising:
storing to a storage device of the e-mail terminal relations between keywords and groups, wherein each of the relations is capable of relating a single keyword with plural groups;
designating one of the groups in the relations; and
categorizing an e-mail that includes the keywords related to the designated group as one belonging to the designated group.

2. The method claimed in claim 1, wherein:
an e-mail comprises a header field; and
at least one of the keywords is compared to the body of the header field at the step of categorizing.

3. The method claimed in claim 2, wherein;
the header field is an originator field of the e-mail;
the keywords comprise an e-mail address; and
the e-mail address is compared to the body of the originator field at the step of categorizing.

4. The method claimed in claim 1, wherein:
an e-mail comprises a message body; and
at least one of the keywords is compared to words in the message body at the step of categorizing.

5. A method of displaying a list of part of e-mails stored in an e-mail terminal on its display device, comprising:
storing to a storage device of the e-mail terminal relations between keywords and groups, wherein each of the relations is capable of relating a single keyword with plural groups;
designating one of the groups in the relations;
categorizing ones of the e-mails that include the keywords related to the designated group as ones belonging to the designated group; and
displaying a list of the categorized mails on a display device of the e-mail terminal.

6. A terminal device for receiving electronic mails or e-mails, comprising:
storage for storing relations between keywords and groups, wherein each of the relations is capable of relating a single keyword with plural groups;
means for designating one of the groups in the relations; and
a processor for categorizing an e-mail that includes the keywords related to the designated group as one belonging to the designated group.

7. The terminal device claimed in claim 6, wherein:
an e-mail comprises a header field; and
the processor compares at least one of the keywords to the body of the header field.

8. The terminal device claimed in claim 7, wherein:
the header field is an originator field of the e-mail;
the keywords comprise an e-mail address; and
the processor compares the e-mail address to the body of the originator field.

9. The terminal device claimed in claim 6, wherein:
an e-mail comprises a message body; and
the processor compares at least one of the keywords to words in the message body.

10. The terminal device claimed in claim 6, 7, 8 or 9, wherein:
the processor categorizes ones of the e-mails that include the keywords related to the designated group as ones belonging to the designated group; and
the terminal device further comprises a display device for displaying a list of the categorized mails.

11. A computer readable medium storing computer executable instructions operable to execute a method for classifying electronic mails or e-mails stored in a storage device of an e-mail terminal into groups by the e-mail terminal, the method comprising:
storing to a storage device of the e-mail terminal relations between keywords and groups, wherein each of the relations is capable of relating a single keyword with plural groups;
designating one of the groups in the relations; and
categorizing an e-mail that includes the keywords related to the designated group as one belonging to the designated group.

12. The medium claimed in claim 11, wherein:
an e-mail comprises a header field; and
at least one of the keywords is compared to the body of the header field at the step of categorizing.

13. The medium claimed in claim 12, wherein:
the header field is an originator field of the e-mail;
the keywords comprise an e-mail address; and
the e-mail address is compared to the body of the originator field at the step of categorizing.

14. The medium claimed in claim 11, wherein:
an e-mail comprises a message body; and
at least one of the keywords is compared to words in the message body at the step of categorizing.

15. A computer readable medium storing computer executable instructions operable to execute a method for displaying a list of part of e-mails stored in an e-mail terminal on its display device, comprising:
storing to a storage device of the e-mail terminal relations between keywords and groups, wherein each of the relations is capable of relating a single keyword with plural groups;
designating one of the groups in the relations;
categorizing ones of the e-mails that include the keywords related to the designated group as ones belonging to the designated group; and
displaying a list of the categorized mails on a display device of the e0mail terminal.
